# EUROPEAN PATENT APPLICATION

(11) **EP 4 776 628 A1**
(43) Date of publication of application: **15.07.2026**
(21) Application number: 26150709.9
(22) Date of filing: 08.01.2026
(51) Int. Cl.: H04N 21/43, H04N 21/439, H04N 21/44, H04N 21/485

(54) **DISPLAY DEVICE AND OPERATING METHOD THEREOF**

(30) Priority: 13.01.2025 KR 20250004691
(71) Applicant: LG Electronics Inc., Yeongdeungpo-gu Seoul 07336 (KR)
(72) Inventor: AHN, Jongyoon, Seoul (KR); CHO, Jaehoon, Seoul (KR); LEE, Chaelin, Seoul (KR); LEE, Younkyung, Seoul (KR)
(74) Representative: Vossius & Partner Patentanwälte Rechtsanwälte mbB

(57) **Abstract**

A display device according to an embodiment of the present disclosure may comprise a display configured to play a content video; and a controller configured to search for one or more streamer broadcasts based on information of the content video, display the searched one or more streamer broadcasts on the display, and play a streamer broadcast video corresponding to a selected streamer broadcast with the content video according to a command for selecting one of the one or more streamer broadcasts.

## Description

### BACKGROUND OF THE INVENTION

### 1.Field of the Invention

This disclosure relates to a display device, and more specifically, to a display device that provides both a content video and a streamer broadcast video.

### 2. Discussion of the Related Art

Digital TV services using wired or wireless communication networks are becoming common. Digital TV services may provide various services which cannot be provided by the existing analog broadcast service.

For example, Internet protocol television (IPTV) and smart TV services which are types of digital TV services provide interactivity to allow user to actively select a type of a program to be watched, a viewing time, etc. The IPTV and smart TV services may provide various additional services, such as Internet search, home shopping and online games, based on such interactivity.

Recently, instead of just watching and listening to sports broadcasts on TV, people are watching with multiple fans at the same time, increasing the fun of watching through communication.

In general, on the PC, sports broadcasting application and streaming application are played and watched together, but there was an inconvenience in that user had to run/search/synchronize each application themselves and this was especially impossible on TV.

### SUMMARY OF THE INVENTION

The purpose of the present disclosure may be to provide both a content video being broadcast and a streamer broadcast video searched based on the content video.

The purpose of the present disclosure may be to synchronize the content video and the streamer broadcast video.

The purpose of the present disclosure may be to balance an audio of the content video and an audio of the streamer broadcast video.

The purpose of the present disclosure may be to automatically adjust a screen ratio of each video according to a category of content video or a size of text included in the streamer broadcast video.

The purpose of the present disclosure may be to identify an object within the content video through analysis of a voice uttered by the streamer.

The purpose of the present disclosure may be to provide summary information summarizing the contents of the streamer's speech in an interval section of the game.

The purpose of the present disclosure may be to easily change a mutual position between the content video and the streamer broadcast video.

A display device according to an embodiment of the present disclosure may comprise a display configured to play a content video; and a controller configured to search for one or more streamer broadcasts based on information of the content video, display the searched one or more streamer broadcasts on the display, and play a streamer broadcast video corresponding to a selected streamer broadcast with the content video according to a command for selecting one of the one or more streamer broadcasts.

A method of operating a display device according to an embodiment of the present disclosure may comprise playing a content video; searching for one or more streamer broadcasts based on information of the content video; displaying the searched one or more streamer broadcasts on the display; and playing a streamer broadcast video corresponding to a selected streamer broadcast with the content video according to a command for selecting one of the one or more streamer broadcasts.

According to an embodiment of the present disclosure, a user may select one of the streamer broadcasts broadcasting the video of a channel being watched and listen to commentary that suits the user's taste. Accordingly, rather than just watching and listening to content video broadcast, a viewing experience may be maximized by watching the streamer channel of your choice and communicating with multiple users at the same time.

According to an embodiment of the present disclosure, as a synchronization between the content video and the streamer broadcast video is adjusted, the user's viewing immersion may be enhanced and real-time interaction with other users may be facilitated.

According to an embodiment of the present disclosure, a balance between the audio of the content video and the audio of the streamer broadcast video may be automatically adjusted to suit the situation. Accordingly, the user's viewing experience may be greatly improved.

According to an embodiment of the present disclosure, the screen ratio of each video may be automatically adjusted according to the category of content video or the size of text included in the streamer broadcast video. Accordingly, the optimal viewing screen ratio may be provided to the user.

According to an embodiment of the present disclosure, the player's name uttered by the streamer may be recognized and the player may be marked in the sports video. Accordingly, the user may immediately recognize the player mentioned by the streamer on the screen, providing an immersive viewing experience.

According to an embodiment of the present disclosure, summary information summarizing the contents of the streamer's speech may be provided in the interval section of the game. Accordingly, users may efficiently receive information about the game through summary information even if they cannot hear the streamer's entire speech.

According to an embodiment of the present disclosure, a user may easily change the mutual position between the content video and the streamer broadcast video. Accordingly, users may configure the layout the way they want, which may increase viewing satisfaction.

### BRIEF DESCRIPTION OF THE DRAWINGS

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of using a remote control device according to an embodiment of the present disclosure.
FIG. 5 is a flowchart illustrating a method of operating a display device according to an embodiment of the present disclosure.
FIGS. 6A to 6C are diagrams illustrating a process of providing a streamer broadcast video while watching a content video according to an embodiment of the present disclosure.
FIG. 7 is a diagram illustrating a method for synchronizing a content video and a streamer broadcast video according to an embodiment of the present disclosure.
FIGS. 8A to 8D are diagrams illustrating an example of adjusting the timing of a content video or a streamer broadcast video through a sync button according to an embodiment of the present disclosure.
FIG. 9 is a diagram illustrating an example of adjusting the audio of a content video and the audio of a streamer broadcast video according to an embodiment of the present disclosure.
FIGS. 10A to 10D are diagrams illustrating an example of adaptively switching audio between a content video and a streamer broadcast video according to an embodiment of the present disclosure.
FIGS. 11A and 11B are diagrams illustrating an example of adjusting the screen size of a content video and a screen size of a streamer broadcast video according to various embodiments of the present disclosure.
FIGS. 12A to 12D are diagrams illustrating an example of adjusting the screen ratio of a content video or a streamer broadcast video.
FIGS. 13A and 13B are diagrams illustrating an example of identifying an object included in a content video based on the audio of a streamer broadcast video according to an embodiment of the present disclosure.
FIGS. 14A to 14C are diagrams illustrating an example of providing a summary of the content of a streamer's speech according to an embodiment of the present disclosure.
FIGS. 15A and 15B are diagrams illustrating an example of changing the display position between a content video and a streamer broadcast video according to an embodiment of the present disclosure.
FIG. 16 is a diagram illustrating an example of providing information about a streamer's advertising product according to an embodiment of the present disclosure.

### DETAILED DESCRIPTION OF THE PREFERRED EMBODIMENTS

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

The display device according to an embodiment of the present disclosure is, for example, an intelligent display device in which a computer support function is added to a broadcast reception function, and is faithful to a broadcast reception function and has an Internet function added thereto, such as a handwritten input device, a touch screen Alternatively, a more user-friendly interface such as a spatial remote control may be provided. In addition, it is connected to the Internet and a computer with the support of a wired or wireless Internet function, so that functions such as e-mail, web browsing, banking, or games may also be performed. A standardized general-purpose OS may be used for these various functions.

Accordingly, in the display device described in the present disclosure, various user-friendly functions may be performed because various applications may be freely added or deleted, for example, on a general-purpose OS kernel. More specifically, the display device may be, for example, a network TV, HBBTV, smart TV, LED TV, OLED TV, and the like, and may be applied to a smart phone in some cases.

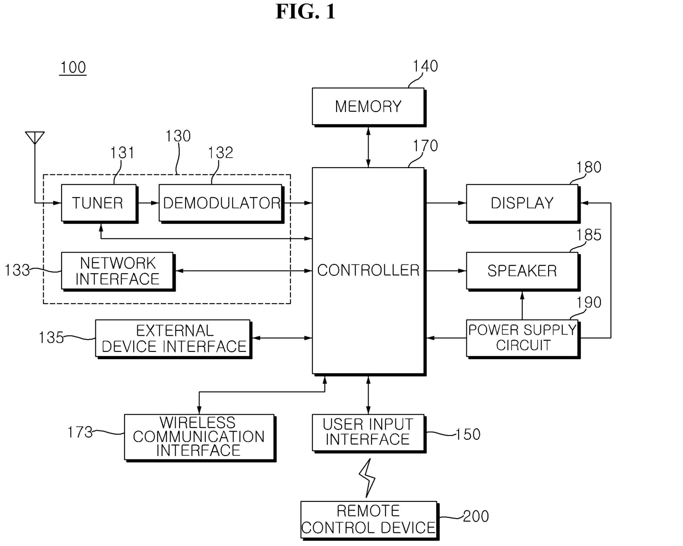

FIG. 1 is a block diagram showing a configuration of a display device according to an embodiment of the present disclosure.

Referring to FIG. 1, a display device 100 may include an image receiver 130, an external device interface 135, a memory 140, a user input interface 150, a controller 170, a wireless communication interface 173, a display 180, a speaker 185, and a power supply circuit 190.

The image receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 the speaker 185.

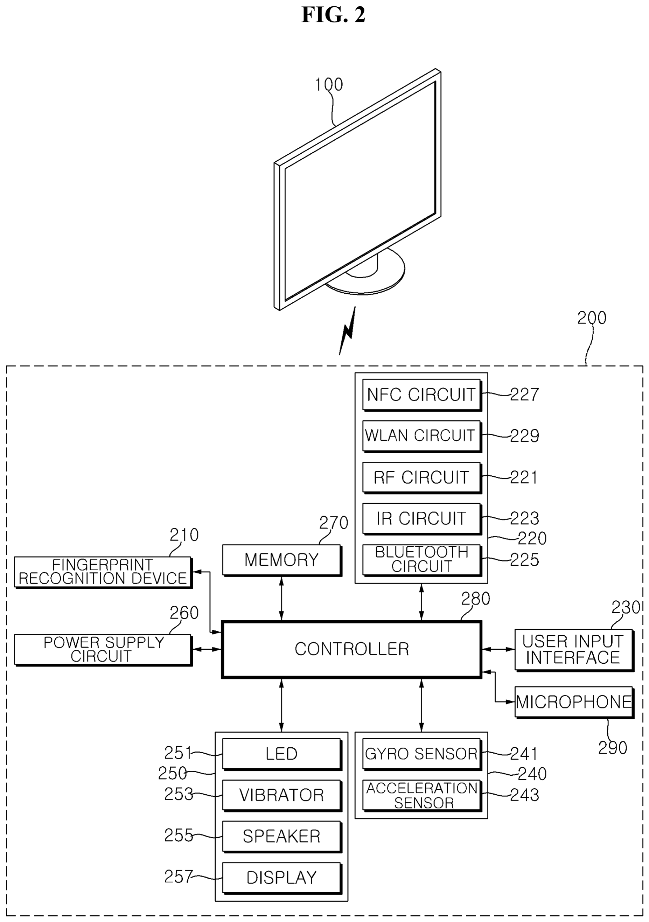

Next, a remote control device according to an embodiment of the present disclosure will be described with reference to FIGS. 2 to 3.

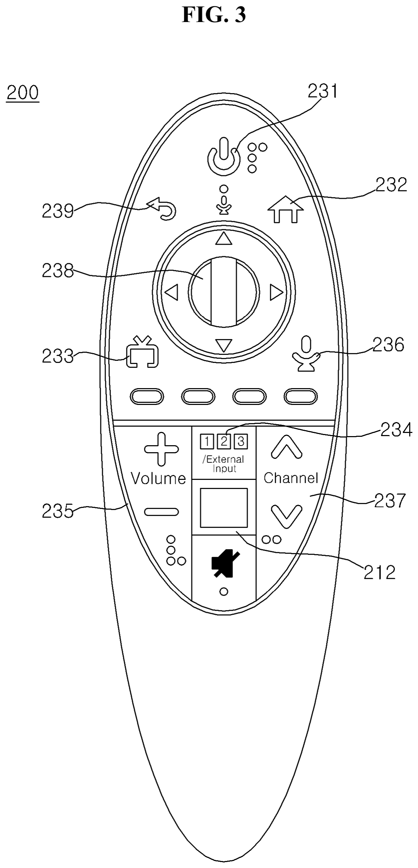

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication unit 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication unit 225.

Also, the microphone 290 of the remote control device 200 may obtain a speech.

A plurality of microphones 290 may be provided.

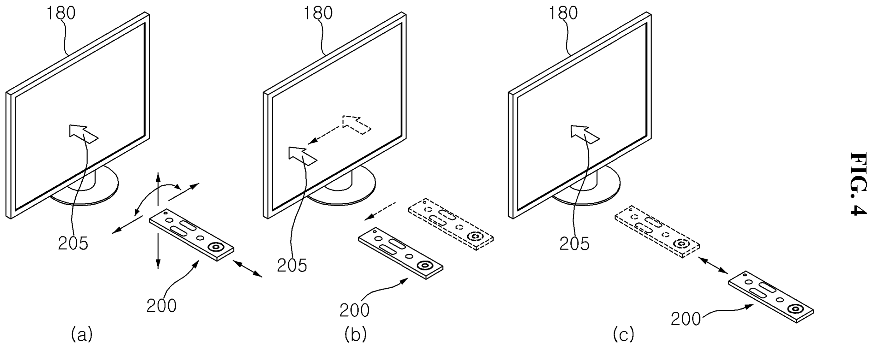

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

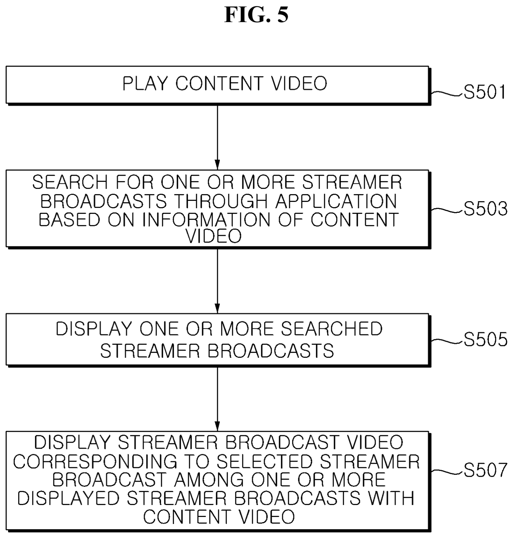

FIG. 5 is a flowchart illustrating a method of operating a display device according to an embodiment of the present disclosure.

Hereinafter, the audio corresponding to the content video may be audio transmitted (or played) together with the content video, and the audio corresponding to the streamer broadcast video may be audio transmitted (or played) together with the streamer broadcast video.

The audio corresponding to the content video may be referred to as a first audio, and the audio corresponding to the streamer broadcast video may be referred to as a second audio.

Referring to FIG. 5, the controller 170 of the display device 100 may play a content video on the display 180 (S501).

In one embodiment, a genre of the content video may be either sports or game, but this is only an example.

The content video may be a video received from a broadcasting station server through the tuner 131, a video received from an external server through the network interface 133, a video received from an external device through the external device interface 135, or a video received from an external terminal through the wireless communication interface 173.

The controller 170 may search for one or more streamer broadcasts through the application based on the information of the content video (S503).

In one embodiment, information on the content video may include metadata of the content video. If the content video is a sports broadcast video (or sports video), the metadata of the content video may include at least one of a title of the content video, a channel of the content video or a broadcast time of the content video, a matchup team, event information, or a game schedule(or a game time).

The controller 170 may search for one or more streamer broadcasts through either an application installed on the display device 100 or an application installed on a set-top box connected to the display device 100 using information on the content video.

The application may be a streaming application that provides a video streaming service.

In one embodiment, the controller 170 may search for one or more streamer broadcasts by matching information on the content video and information on the streamer broadcast. The information on the streamer broadcast may include at least one of the title or broadcast time of the streamer broadcast. For example, the controller 170 may search for one or more streamer broadcasts that match the matchup team and game time by comparing the metadata of the content video and information on the streamer broadcast.

When a plurality of streamer broadcasts are searched, the controller 170 may determine a recommendation ranking based on a reliability of the streamer relaying each streamer broadcast, and may list the plurality of streamer broadcasts according to the recommendation ranking. The controller 170 may preferentially display streamer broadcasts with high reliability.

The streamer's reliability may be determined based on at least one of the number of live participants, number of subscribers, or existing viewing history of the channel.

The greater the number of live participants or subscribers, the higher the reliability may be, and if the user has an existing viewing history, the reliability may increase.

In another embodiment, the controller 170 may search for streamer broadcasts using information about streamers subscribed to by a user account logged in to the streaming application.

The controller 170 may display one or more searched streamer broadcasts on the display 180 (S505).

The controller 170 may display one or more searched streamer broadcasts by overlaying them on the content video.

The controller 170 may display a streamer broadcast video corresponding to a selected streamer broadcast among one or more displayed streamer broadcasts along with the content video on the display 180 (S507).

A source of the content video and a source of the streamer broadcast video may be the same or different. For example, the source of the content video and the streamer broadcast video may be a set-top box connected through the external device interface 135.

As another example, the source of the content video may be a broadcasting station connected through the tuner 131, and the source of the streamer broadcast video may be the set-top box connected through the external device interface 135.

The controller 170 may display a chat window and an advertising video on the display 180 in addition to the content video and the streamer broadcast video.

The controller 170 may receive a command to select two or more of a plurality of streamer broadcasts, and display streamer broadcast videos corresponding to the selected streamer broadcasts along with the content video on the display 180 according to the received command.

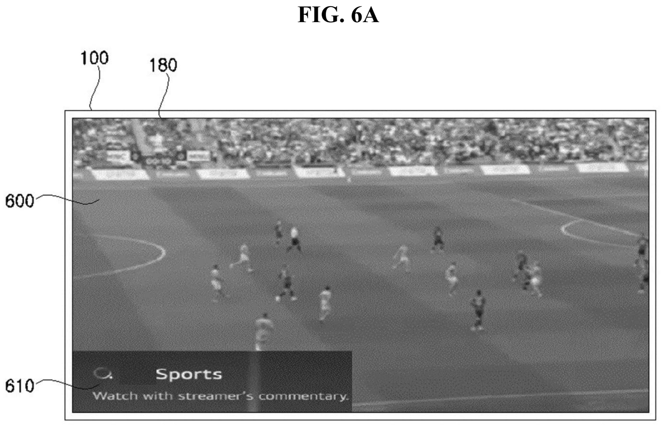

FIGS. 6A to 6C are diagrams illustrating a process of providing a streamer broadcast video while watching a content video according to an embodiment of the present disclosure.

Referring to FIG. 6A , the controller 170 of the display device 100 may play the content video 600 on the display 180. The controller 170 may display a pop-up window 610 for searching for a streamer broadcast on the display 180 while the content video 600 is being played.

In one embodiment, the controller 170 may automatically expose the pop-up window 610 when the genre of the content video 600 is sports.

In another embodiment, the controller 170 may expose the pop-up window 610 when receiving a user input for selecting a specific button provided on the remote control device 200.

In another embodiment, the controller 170 may expose the pop-up window 610 upon receiving a voice command to search for the streamer broadcast.

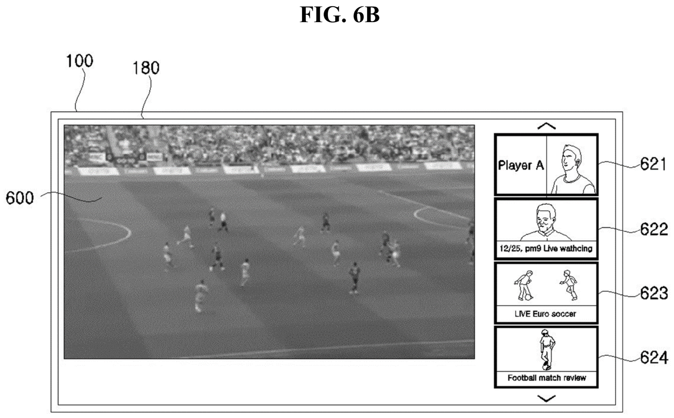

The controller 170 may display a plurality of searched streamer broadcasts 621 to 624 on the display 180 according to a command for selecting the pop-up window 610, as shown in FIG. 6B. The controller 170 may reduce the size of the content video 600 according to a command for selecting the pop-up window 610 and display a plurality of searched streamer broadcasts 621 to 624 on one side of the reduced content video 600.

A plurality of streamer broadcasts 621 to 624 may be referred to as a streamer channel list.

The controller 170 may display the content video 600 on a first area of the screen and display the plurality of streamer broadcasts 621 to 624 on a second area of the screen.

The controller 170 may search for a plurality of streamer broadcasts through the application using information on the content video 600 according to a command for selecting the pop-up window 610. The application may be the streaming application that provides a video streaming service. In one embodiment, the controller 170 may search for the plurality of streamer broadcasts 621 to 624 by matching information on the content video and information on the streamer broadcast.

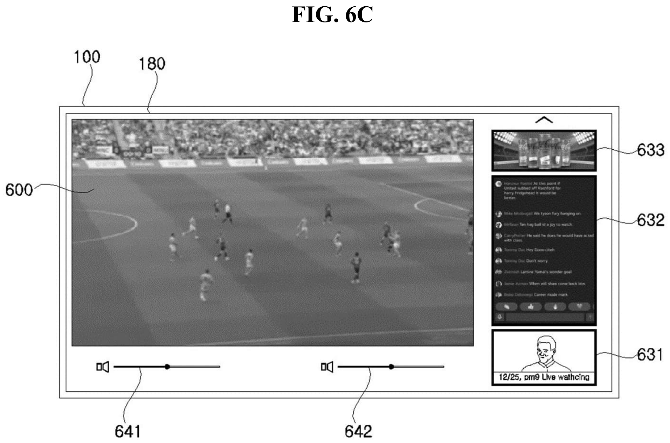

The controller 170 receives a command to select one of the plurality of streamer broadcasts 621 to 624, and according to the received command, as shown in FIG. 6C, the streamer broadcast video 631 corresponding to the selected streamer broadcast 622 may be displayed on the display 180.

For example, if the content video is a sports video, streamer broadcasts (or streamer channels) related to the sports video being broadcast may be automatically created.

The controller 170 may convert the streamer broadcast list to the streamer broadcast video 631 in response to the streamer broadcast 622 being selected.

The streamer broadcast video 631 may be a video in which a streamer broadcasts the content video 600.

The controller 170 may further display a chat window 632 and an advertisement video 633 in addition to the streamer broadcast video 631. The chat window 632 is a window for sharing reactions to the streamer's broadcast in real time and may include real-time chat history. The chat window 632 may further include an emoticon window for sending emoticons and a voice input window for chatting through voice input.

The advertisement video 633 may represent an advertisement provided by an application that provides the streamer broadcast video 631.

The controller 170 may further display a first volume control bar 641 for adjusting a volume of audio corresponding to the content video 600 and a second volume control bar 641 for adjusting a volume of audio corresponding to the streamer broadcast video 631.

The user may select the voice he or she wants to listen to by emphasizing it through the first volume control bar 641 and the second volume control bar 641.

As such, according to an embodiment of the present disclosure, a user may select one of the streamer broadcasts broadcasting the video of the channel being watched and listen to commentary that suits the user's taste.

Accordingly, rather than just watching and listening to content video broadcasts, the viewing experience may be maximized by watching the streamer channel of your choice and communicating with multiple users at the same time.

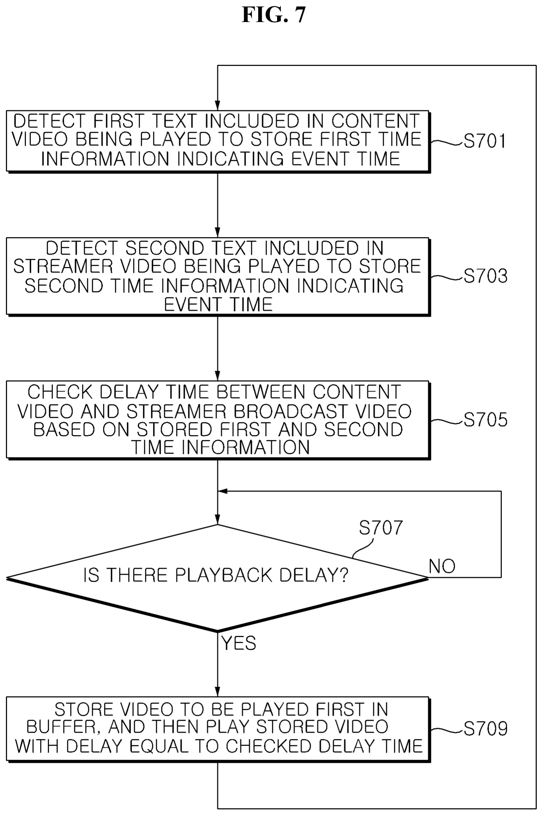

FIG. 7 is a diagram illustrating a method for synchronizing a content video and a streamer broadcast video according to an embodiment of the present disclosure.

FIG. 7 may be included in step S507 of FIG. 5 or may be an operation performed after step S507.

Since the content video and the streamer broadcast video may be played from different sources, they may be out of sync. Accordingly, this disclosure presents a method for synchronizing the content video and the streamer broadcast video.

Referring to FIG. 7, the controller 170 may detect a first text included in the content video being played and store first time information indicating the event time (or event progress time) in the memory 140 (S701).

If the content video is a sports broadcast video, the event progress time may be the real-time game progress time. If the content video is a game broadcast video, the event progress time may be the real-time game progress time.

In the case of a sports broadcast video, a number indicating a current game progress time may be displayed in an upper left or upper right corner of the screen.

The controller 170 may detect the first text from the content video through optical character recognition (OCR) and extract a number from the detected text. If the extracted number changes over time, the controller 170 may recognize the number as the event progress time.

The controller 170 may detect a second text included in the streamer video being played and store second time information indicating the event time (or event progress time) in the memory 140 (S703).

The controller 170 may detect the second text from the streamer video through optical character recognition (OCR) and extract a number from the detected second text. If the extracted number changes over time, the controller 170 may recognize the number as the event progress time.

The controller 170 may check a delay time between the content video and the streamer broadcast video based on the stored first and second time information (S705).

The controller 170 may obtain a difference between the first time information and the second time information as the delay time.

If it is determined that there is a playback delay between videos based on the checked delay time (S707), the controller 170 may store the video to be played first in the buffer of the memory 140, and then play the stored video with a delay equal to the checked delay time (S709).

For example, if the delay time is 2 seconds and the content video is played first, the controller 170 may store the content video in the buffer and play the stored content video 2 seconds later to synchronize it with the streamer broadcast video.

The controller 170 may periodically (for example, every N minutes) check the delay time between the content video and the streamer broadcast video and readjust the playback timing of the video output. To this end, the controller 170 may perform step S709 and then perform step S701 and subsequent steps again.

If buffering occurs in at least one of the content video and the streamer broadcast video, or a reception quality of at least one video changes, the controller 170 may check the delay time, and synchronize the content video and the streamer broadcast video based on the checked delay time. When the reception quality of the video changes, it may be a case where adaptive streaming occurs in which a picture quality or a transmission speed of the streamer's broadcast video is adjusted depending on a network status.

In this way, according to the embodiment of the present disclosure, as the synchronization between the content video and the streamer broadcast video is adjusted, the user's viewing immersion may be enhanced and real-time interaction with other users may be facilitated.

In another embodiment, when the controller 170 fails to extract time information from text included in either the content video or the streamer broadcast video, may synchronize the content video and the streamer broadcast video based on a first peak point of the first audio played with the content video and a second peak point of the second audio played with the streamer broadcast video. For example, if the content video is a soccer game video, loud cheering sounds from the audience may commonly be heard during a scoring scene.

The controller 170 may compare the first peak point of the first audio output from the scoring scene of the soccer game video with the second peak point of the second audio output from the streamer broadcast video, and check the delay time of the soccer game video and the streamer broadcast video based on a comparison result. The controller 170 stores the video to be played first in a buffer according to the checked delay time, and then plays the stored video with a delay equal to the delay time.

In another embodiment, the controller 170 may check the delay time by matching a scene analysis result of the content video with the audio corresponding to the streamer broadcast video. For example, the controller 170 may identify a scoring scene in a soccer game video through a video analysis, and may identify the scoring scene by analyzing the streamer's voice included in the audio of the streamer broadcast video.

The controller 170 may check the delay time by comparing a timing of the scoring scene in the soccer game video with a timing of the scoring scene through the streamer's voice, and synchronize the two videos based on the checked delay time.

In another embodiment, when the controller 170 fails to extract time information from text included in either the content video or the streamer broadcast video, may check the delay time by matching the scene analysis result of the content video and the audio of the streamer broadcast video.

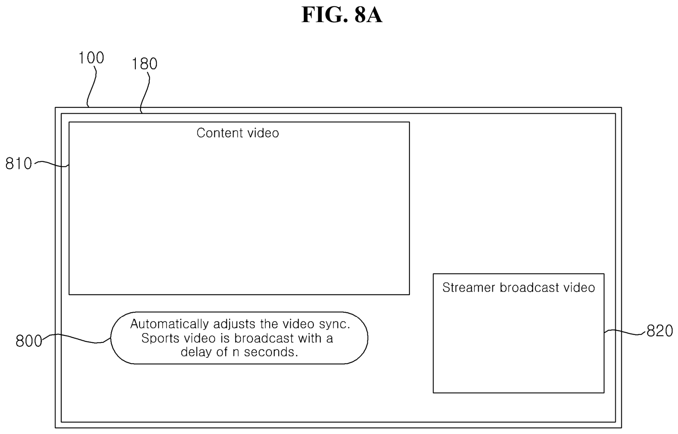

FIGS. 8A to 8D are diagrams illustrating an example of adjusting the timing of a content video or a streamer broadcast video through a sync button according to an embodiment of the present disclosure.

Referring to FIG. 8A, the display device 100 may play a content video 810 and a streamer broadcast video 820 on the display 180.

If there is a delay time between the content video 810 and the streamer broadcast video 820, the display device 100 may display a sync notification pop-up window 800 on the display 180 to automatically synchronize the two videos. The sync notification pop-up window 800 may include the delay time checked in step S705 of FIG. 7.

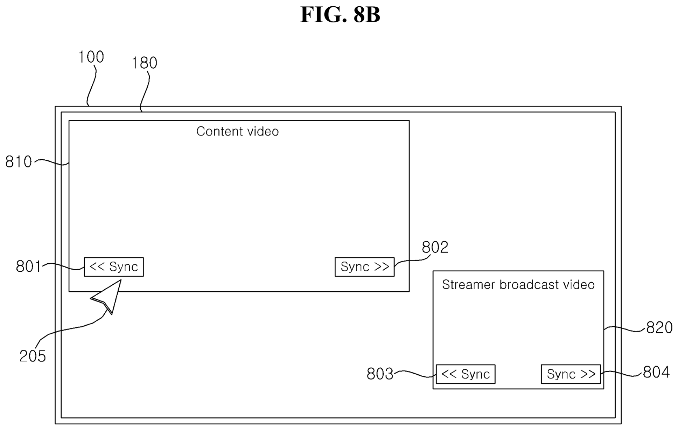

Referring to FIG. 8B, when the pointer 205 is located at the bottom left or bottom right of the content video 810 or the bottom left or bottom right of the streamer broadcast video 820, the display device 100 may display a sync button to precisely adjust the sync between the two images.

The display device 100 may display a first sync button 801 and a second sync button 802 that may adjust a playback timing of the content video 810 on the display 180.

The first sync button 801 may be a button to slow down the playback of the content video 810 by a certain amount of time, and the second sync button 802 may be a button to adjust the playback of the content video 810 to be fast by a certain time. The first sync button 801 and the second sync button 802 may be displayed overlapping the content video 810, but may also be displayed at a bottom of the content video 810, and the display positions do not need to be limited to this.

The display device 100 may display a third sync button 803 and a fourth sync button 804 that may adjust the playback timing of the streamer broadcast video 820 on the display 180. The third sync button 803 may be a button to slow down the playback of the streamer video 820 by a certain amount of time, and the fourth sync button 804 may be a button to adjust the playback of the streamer video 820 to be fast by a certain time. The third sync button 803 and the fourth sync button 804 may be displayed overlapping the streamer broadcast video 820, but the display positions do not need to be limited thereto.

The user may manually adjust the playback time of each video by clicking the sync button through the pointer 205 that moves according to the movement of the remote control device 200.

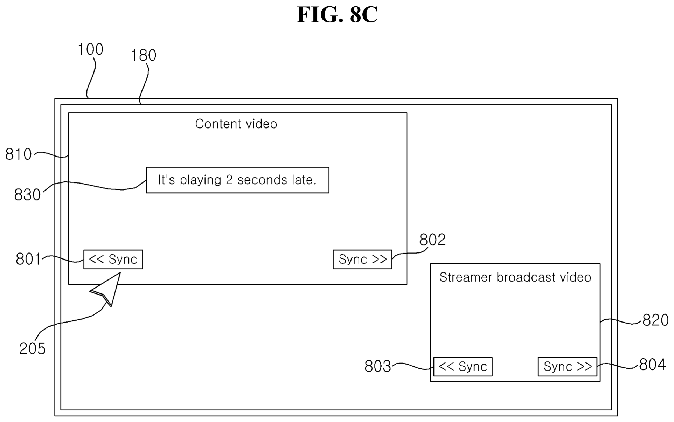

When a transmission of the content video 810 is adjusted as the first sync button 801 is selected, the display device 100 may display a delay pop-up window 830 on the display 180, indicating that the content video 810 is being played 2 seconds slowly, as shown in FIG. 8C.

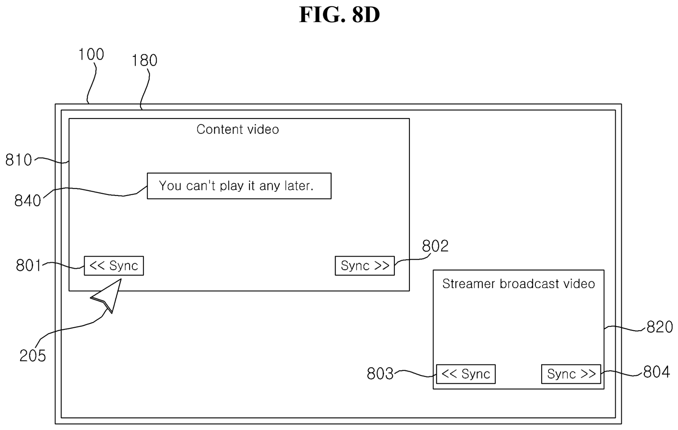

When the display device 100 cannot store frames of the content video 810 due to insufficient capacity of the memory 140, a non-delay pop-up window 840 indicating that the content video 810 may no longer be played slowly even if the user clicks the sync button may be displayed on the display 180, as shown in FIG. 8D.

According to an embodiment of the present disclosure, a sync adjustment in seconds may be performed by clicking a sync button, as shown in FIG. 8A, and the sync adjustment in an unit of less than a second may be performed according to the embodiment in FIG. 7.

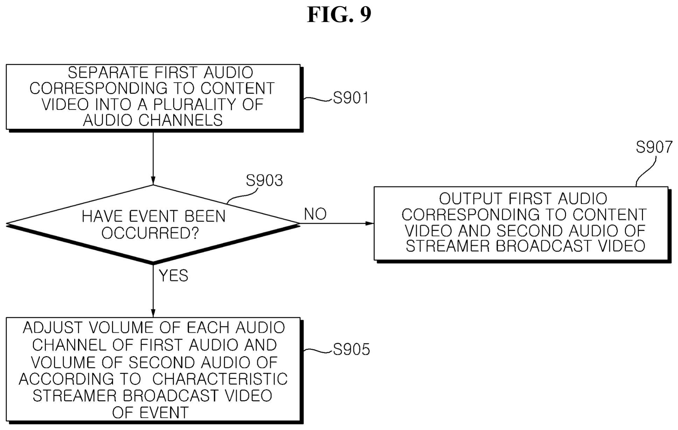

FIG. 9 is a diagram illustrating an example of adjusting the audio of a content video and the audio of a streamer broadcast video according to an embodiment of the present disclosure.

FIG. 9 may be an example performed after step S507 of FIG. 5 .

It is assumed that the content video is a soccer game video.

Referring to FIG. 9, the controller 170 may separate the first audio corresponding to the content video into a plurality of audio channels (S901).

The first audio may be audio output together with the content video. The controller 170 may separate the first audio into the plurality of audio channels according to a type of sound. For example, the plurality of audio channels may include a broadcasting sound spoken by a commentator of the content video, a player sound spoken by the players, a coach sound spoken by a coach, and a crowd sound spoken by spectators.

In one embodiment, the controller 170 may separate the first audio into the plurality of audio channels using a plurality of audio sources that provide the first audio.

In another embodiment, the controller 170 may separate the first audio into the plurality of audio channels using positions of sounds constituting the first audio.

Additionally, the controller 170 may separate the second audio corresponding to the streamer broadcast video into a plurality of audio channels according to the type of sound.

The controller 170 may determine whether an event has occurred based on the content video being played (S903).

In one embodiment, the event may be any one of a scoring scene in a soccer game video, a playback of a highlight video, a half time, a player replacement, a timeout, an advertisement play, and an offense/defense change.

In one embodiment, the controller 170 may identify an object included in a content video through an object detection model and recognize a behavior of the identified object through an action recognition model.

The object detection model may be either a YOLO (you Only Look Once) model in which objects present in a video and their locations may be predicted by looking at the video only once, or a Faster R-CNN (Regions with Convolution Neural Networks) model that extracts a feature map from video and identifies a region of interest based on the extracted feature map.

The action recognition model may be a 3D CNN (3D Convolutional Neural Networks) model that recognizes the behavior of an object by simultaneously processing spatial and temporal information using a 3D filter and the temporal dimension of the video.

The controller 170 may determine whether the event has occurred using the object's behavior inferred through the behavior recognition model.

In another embodiment, the controller 170 may convert the audio corresponding to the content video or the audio corresponding to the streamer broadcast video into a text and determine whether an event has occurred based on the converted text.

When it is determined that the event has occurred, the controller 170 may adjust the volume of each audio channel of the first audio and the volume of the second audio of the streamer broadcast video according to a characteristic of the event (S905).

For example, when the event such as a scoring situation occurs, the controller 170 may decrease the volume of the broadcast sound of the content video and the second audio of the streamer broadcast video and increase the volume of the crowd sound and player sound of the content video.

As another example, when the event called the timeout situation occurs, the controller 170 may reduce the volume of the crowd sound in the content video and increase the volume of the coach sound and the player sound. The controller 170 may control the output of the speaker 185 to adjust the volume of each audio.

As such, according to an embodiment of the present disclosure, a sense of presence may be enhanced by adjusting the volume of the separated audio channels to be optimized according to the situation of the event.

If it is determined that no event has occurred, the controller 170 may output the first audio corresponding to the content video and the second audio of the streamer broadcast video (S907).

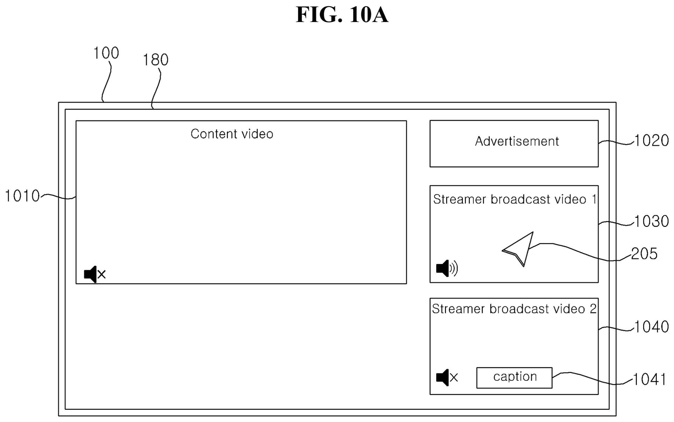

FIGS. 10A to 10D are diagrams illustrating an example of adaptively switching audio between a content video and a streamer broadcast video according to an embodiment of the present disclosure.

Referring to FIG. 10A, the display device 100 may display a content video 1010, an advertisement video 1020, a first streamer broadcast video 1030, and a second streamer broadcast video 1040 on the display 180.

Initially, the volume of the broadcasting sound included in the audio of the content video 1010 may be reduced, and the volume of the broadcasting sound included in the audio of the streamer broadcasting video selected by the user may be set to be heard louder.

When the pointer 205 is positioned (hovered) on the first streamer broadcast video 1030, the display device 100 may increase the volume of the broadcast sound of the first streamer broadcast video 1030, and may decrease the volumes of each of the broadcast sound of the content video 1010 and the broadcast sound of the second streamer broadcast video 1040.

When receiving a command to select the first streamer broadcast video 1030, the display device 100 may mute each of the broadcast sound of the content video 1010 and the broadcast sound of the second streamer broadcast video 1040. In addition, when receiving a command to select the first streamer broadcast video 1030, the display device 100 may reduce the screen size of each of the content video 1010 and the second streamer broadcast video 1040, and may increase the screen size of the selected first streamer broadcast video 1030. Additionally, when receiving a command to select the first streamer video 1030, the display device 100 may display a subtitle 1041 matching the audio of the second streamer video 1040 on the second streamer video 1040.

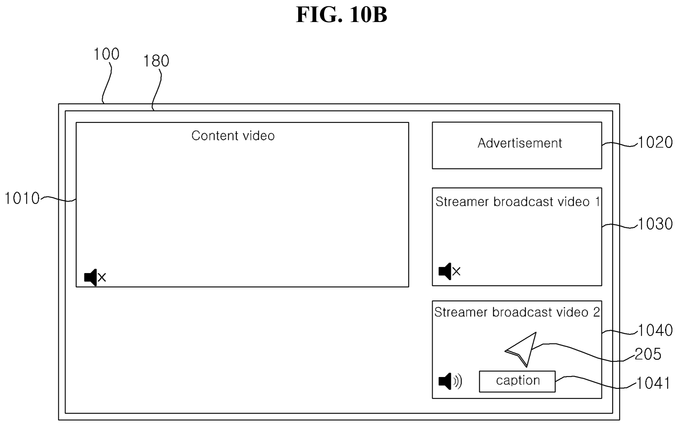

Referring to FIG. 10B, when the pointer 205 is positioned on the second streamer broadcast video 1040 in the state of FIG. 10a, the display device 100 may increase the volume of the broadcast sound of the second streamer broadcast video 1040, and may reduce the volume of each of the broadcast sound of the content video 1010 and the broadcast sound of the first streamer broadcast video 1030.

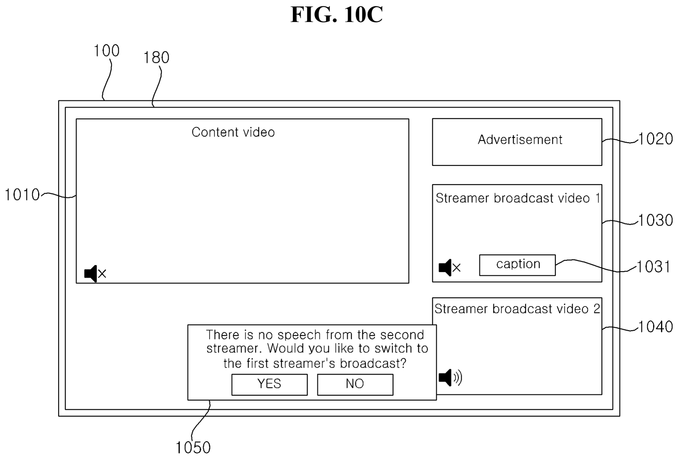

Thereafter, when the display device 100 receives a command to select the second streamer broadcast video 1040, the display device 100 may mute the broadcast sound of the content video 1010 and the broadcast sound of the first streamer broadcast video 1030. In addition, when the display device 100 receives a command to select the second streamer broadcast video 1040, the display device 100 may reduce the screen size of each of the content video 1010 and the first streamer broadcast video 1030, and may increase the screen size of the selected second streamer broadcast video 1040. In addition, when the display device 100 receives a command to select the second streamer video 1040, the display device 100 may display, on the first streamer video 1030, subtitles 1031 that match the audio of the first streamer video 1030, as shown in FIG. 10C.

When the audio corresponding to the second streamer broadcast video 1040 set as main is not output for a certain period of time and the audio corresponding to the first streamer broadcast video 1030 is being output, the display device 100 may display a switching pop-up window 1050 as shown in FIG. 10C on the display 180. The switching pop-up window 1050 may be a window that automatically increases the audio of another streamer's broadcast video and notifies the user to switch to the main channel.

When the display device 100 accepts the switch to another streamer broadcast video through the switching pop-up window 1050, as shown in FIG. 10A, the display device 100 may mute the broadcast sound of the content video 1010 and the second streamer broadcast video 1040, and may output the broadcast sound of the first streamer broadcast video 1030.

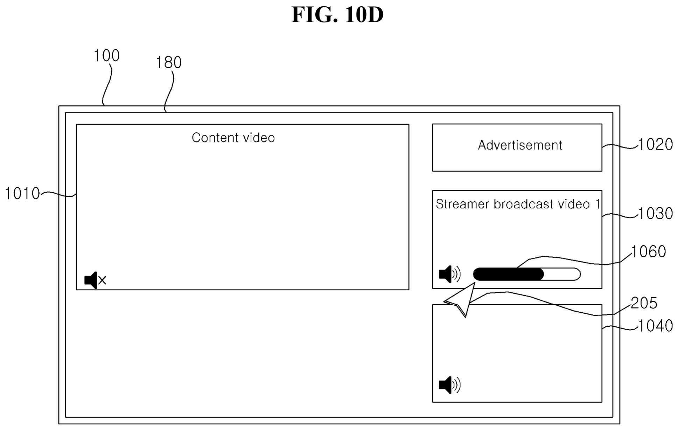

Referring to FIG. 10D, the display device 100 may display the content video 1010, the advertisement video 1020, the first streamer video 1030, and the second streamer video 1040 on the display 180.

When the pointer 205 is located on the first streamer broadcast video 1030 and a signal for selecting the left or right button is selected after selecting the volume button of the remote control device 200, the display device 100 may decrease or increase the volume of the audio corresponding to the first streamer broadcast video 1030. A change in the volume of audio corresponding to the first streamer broadcast video 1030 may be indicated through a volume control bar 1060.

As such, according to an embodiment of the present disclosure, the balance between the audio of the content video and the audio of the streamer broadcast video may be automatically adjusted to suit the situation. Accordingly, the user's viewing experience may be greatly improved.

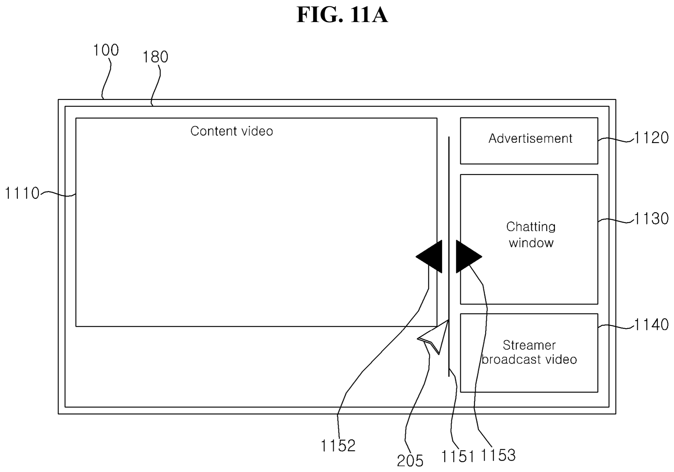

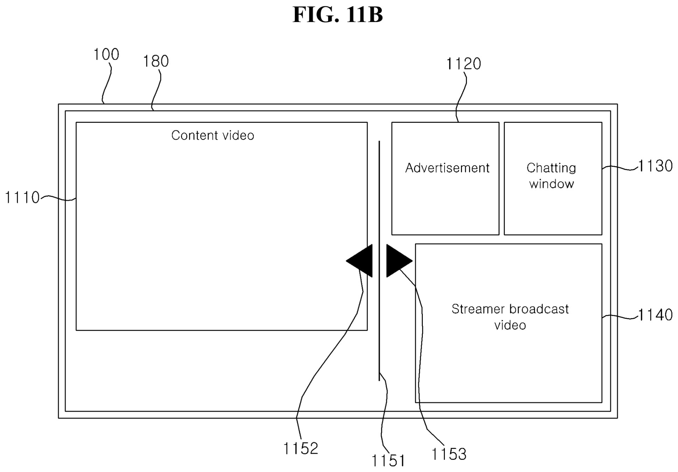

FIGS. 11A and 11B are diagrams illustrating an example of adjusting a screen size of a content video and a screen size of a streamer broadcast video according to various embodiments of the present disclosure.

Referring to FIG. 11A, the display device 100 may display a content video 1110, an advertisement video 1120, a chat window 1130, and a streamer broadcast video 1140 on the display 180.

The display device 100 may enter a screen ratio adjustment mode in which the screen ratio is changed according to a command for selecting a menu for adjusting the screen size or a command for selecting a hot key provided in the remote control device 200. The display device 100 may display a split bar handler 1151, a left indicator 1152, and a right indicator 1153 on the display 180 upon entering the screen ratio adjustment mode.

The split bar handler 1151 may be a handler for adjusting the size of each UI element in the screen. Each of the content video 1110, the advertisement video 1120, the chat window 1130, and the streamer broadcast video 1140 may be one UI element. The split bar handler 1151 may identify the boundary of UI elements. In FIG. 11A, only one split bar handler 1151 is shown, but it is not limited to this and may be provided at the boundary between UI elements.

The left indicator 1152 may be an indicator indicating that the split bar handler 1151 is moved to the left, and the right indicator 1153 may be an indicator indicating that the split bar handler 1151 is moving to the right.

The display device 100 may move the split bar handler 1151 to the left or right as it receives a command to select the left or right button of the remote control device 200. Accordingly, the size of each UI element may decrease or increase.

In another embodiment, the display device 100 moves the split bar handler 1151 to the left or right as it receives a command from the remote control device 200 to move the pointer 205 located on the split bar handler 1151 to the left or right. Accordingly, the size of each UI element may decrease or increase.

For example, when the split bar handler 1151 is moved to the left, the size of the content video 1110 may be reduced, and the sizes of the advertisement video 1120, chat window 1130, and streamer broadcast video 1140 may be increased.

As another example, when the split bar handler 1151 is moved to the left, the size of the content video 1110 may be reduced, and the sizes of the advertising video 1120, the chat window 1130, and the streamer broadcast video 1140 may increase, and the layout of the advertising video 1120 and the chat window 1130 may change as shown in FIG. 11b.

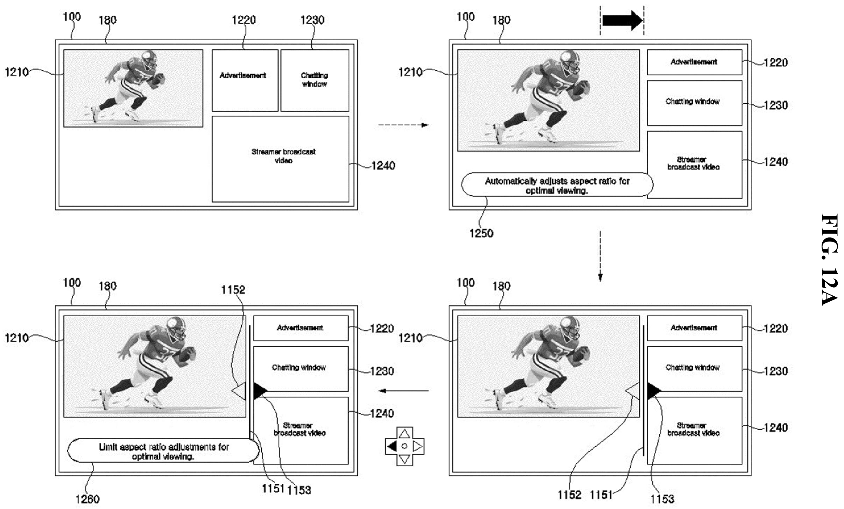

FIGS. 12A to 12D are diagrams illustrating an example of adjusting the screen ratio of a content video or a streamer broadcast video.

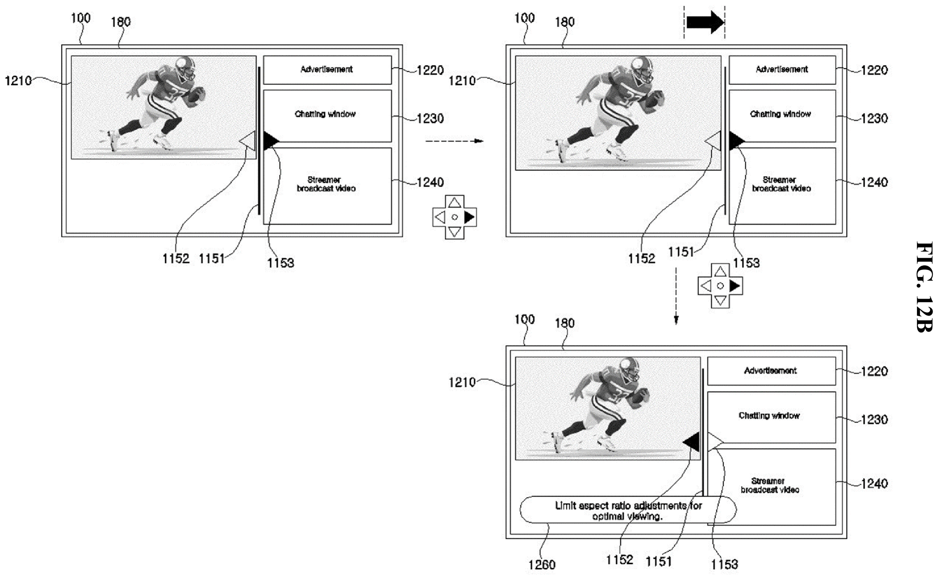

FIGS. 12A and 12B are diagrams illustrating an example of adjusting the screen ratio of a content video according to a category of sport video.

Referring to FIG. 12A, the display device 100 may display a sports video 1210, an advertising video 1220, a chat window 1230, and a streamer broadcast video 1240 on the display 180. The sports video 1210 may be a content video representing a football sport.

In one embodiment, the display device 100 may calculate a minimum screen ratio of the sports video 1210 based on the category of the sports video 1210. The display device 100 may store a plurality of minimum screen ratios corresponding to each of a plurality of items in the memory 140. The minimum screen ratio may be a minimum ratio of a vertical length to a horizontal length of the sports video 1210. The display device 100 may identify a ball included in the sports video 1210 through an object detection model and recognize the category based on the identified ball.

In another embodiment, the display device 100 may calculate the minimum screen ratio of the sports video 1210 based on the size of the ball included in the sports video 1210.

If the ratio between the size of the ball and the size of the sports video 1210 is less than a certain ratio, the display device 100 may enlarge the screen ratio of the sports video 1210 by a preset minimum screen ratio. The display device 100 may display an auto-adjustment pop-up window 1250 on the display 180 indicating that the screen ratio has been adjusted for optimal viewing of the sports video 1210.

The display device 100 may enter the screen ratio adjustment mode in which the screen ratio is changed according to a command for selecting a menu for adjusting the screen size or a command for selecting a hot key provided in the remote control device 200. The display device 100 may display a split bar handler 1151, a left indicator 1152, and a right indicator 1153 on the display 180 upon entering the screen ratio adjustment mode.

When the display device 100 receives a command to select the left button from the remote control device 200, the display device 100 may display an adjustment restriction pop-up window 1260 on the display 180 indicating that adjustment of the screen ratio is restricted for optimal viewing. Additionally, when the screen ratio of the sports video 1210 is the minimum screen ratio, the display device 100 may deactivate the left indicator 1152 corresponding to the left button.

Thereafter, the display device 100 continuously receives commands to select the right button from the remote control device 200, and when the screen ratio of the sports video 1210 reaches a maximum screen ratio, as shown in FIG. 12B, may display an adjustment restriction pop-up window 1260 indicating that adjustment of the screen ratio is restricted for optimal viewing on the display 180. Additionally, when the screen ratio of the sports video 1210 is the maximum screen ratio, the display device 100 may deactivate the right indicator 1153 corresponding to the right button.

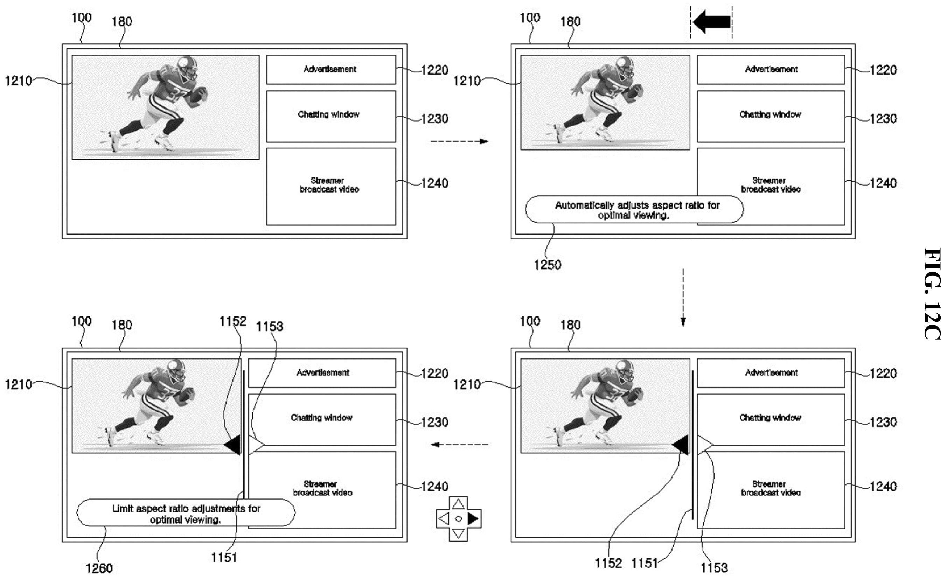

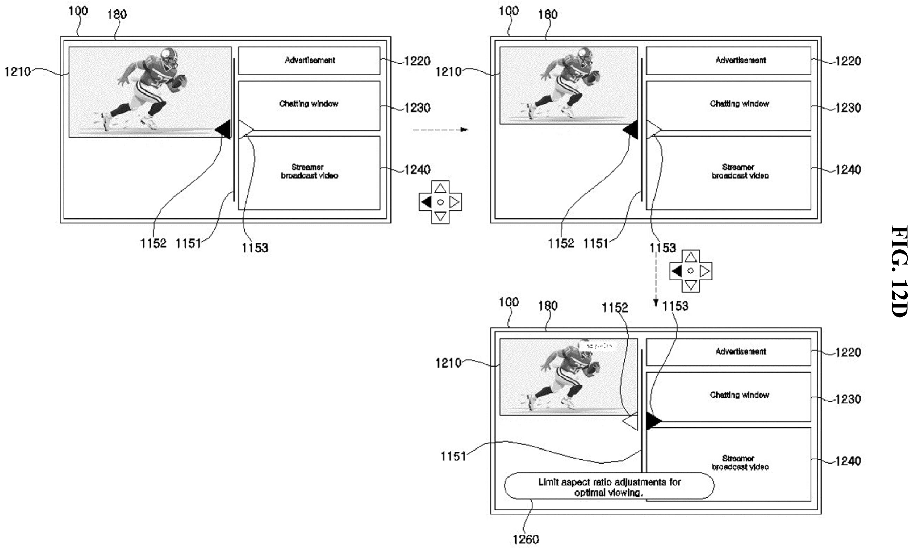

Next, Figures 12C and 12D will be described.

FIGS. 12C and 12D are diagrams illustrating an example of adjusting the screen ratio of a streamer broadcast video according to the size of a text included in the streamer broadcast video.

In one embodiment, the display device 100 may determine the minimum screen ratio of the streamer video 1240 based on the size of the text included in the streamer video 1240. The display device 100 may store a plurality of minimum screen ratios corresponding to a plurality of text sizes in the memory 140 . The minimum screen ratio may be a minimum ratio of the vertical length to the horizontal length of the streamer broadcast video 1240. The display device 100 may recognize the text included in the streamer broadcast video 1240 through optical character recognition and calculate the size of the recognized text.

The display device 100 may enlarge the screen ratio of the streamer broadcast video 1240 that matches the calculated text size by a preset minimum screen ratio. The display device 100 may display an auto-adjustment pop-up window 1250 on the display 180 indicating that the screen ratio has been adjusted for optimal viewing of the streamer video 1240.

The display device 100 may enter a screen ratio adjustment mode in which the screen ratio is changed according to a command for selecting a menu for adjusting the screen size or a command for selecting a hot key provided in the remote control device 200. The display device 100 may display a split bar handler 1151, a left indicator 1152, and a right indicator 1153 on the display 180 upon entering the screen ratio adjustment mode.

When the display device 100 receives a command to select the right button from the remote control device 200, the display device 100 may display an adjustment restriction pop-up window 1260 on the display 180 indicating that adjustment of the screen ratio is restricted for optimal viewing. Additionally, when the screen ratio of the streamer broadcast video 1240 is the minimum screen ratio, the display device 100 may deactivate the right indicator 1153 corresponding to the right button.

Thereafter, the display device 100 continuously receives commands to select the left button from the remote control device 200, and when the screen ratio of the streamer broadcast video 1240 reaches the maximum screen ratio, as shown in FIG. 12D, may display an adjustment restriction pop-up window 1260 indicating that adjustment of the screen ratio is restricted for optimal viewing on the display 180. Additionally, when the screen ratio of the streamer broadcast video 1240 is the maximum screen ratio, the display device 100 may deactivate the left indicator 1152 corresponding to the left button.

As such, according to the embodiment of the present disclosure, the screen ratio of each video may be automatically adjusted according to the category(or type) of the content video or the size of the text included in the streamer broadcast video. Accordingly, the optimal viewing screen ratio may be provided to the user.

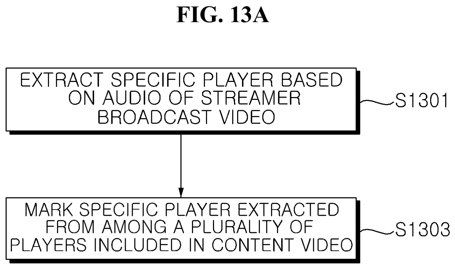

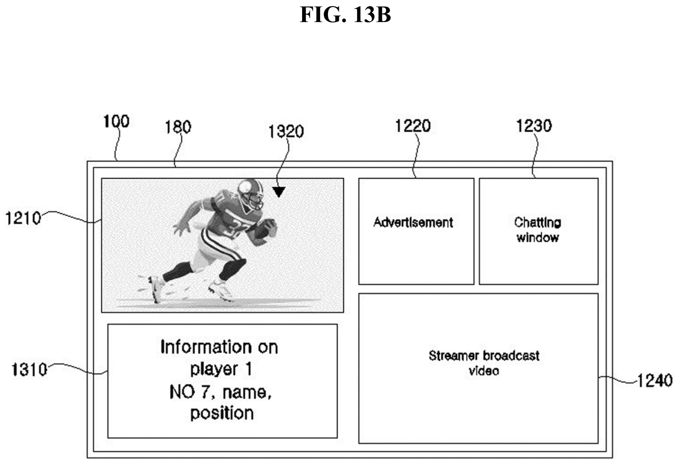

FIGS. 13A and 13B are diagrams illustrating an example of identifying an object included in a content video based on the audio of a streamer broadcast video according to an embodiment of the present disclosure.

Referring to FIG. 13A, the controller 170 may extract a specific player based on the audio of the streamer broadcast video while playing the content video and the streamer broadcast video (S1301).

In one embodiment, the controller 170 may convert the audio corresponding to the streamer broadcast video into a text through a Speech To Text (STT) engine, and obtain an analysis result of the converted text through a Natural Language Processing (NLP) engine. The controller 170 may identify the player's name through the text and obtain a search result for the identified name as the analysis result.

The analysis result may include at least one of a specific player's name, a specific player's uniform number, or a specific player's face image. Extracting a specific player may mean extracting at least one of the specific player's name, the specific player's uniform number, or the specific player's face image.

The controller 170 may mark a specific player extracted from among a plurality of players included in the content video (S1303).

The controller 170 may identify a plurality of players from the content video using an object detection model. The controller 170 may identify each player by recognizing each player's face, each player's name, or each player's uniform number using the object detection model.

In one embodiment, the controller 170 may identify a plurality of players within the content video after a specific player is extracted based on the audio of the streamer broadcast video.

In another embodiment, the controller 170 may identify the plurality of players within the content video, regardless of whether a specific player is extracted based on the audio of the streamer broadcast video.

As shown in FIG. 13B, the controller 170 may display an indicator 1320 on one side of the player that may identify a specific player extracted from among the plurality of players included in the content video.

As shown in FIG. 13C, the controller 170 may display the extracted information 1310 about the specific player together with the sports video 1210 and the streamer broadcast video 1240. Information 1310 about the specific player may be displayed on a blank area of the screen.

Information 1310 about the specific player may include one or more of the player's real-time record, the player's name, the player's back number, the player's age, and the player's position.

As the controller 170 receives a command to select the indicator 1320 of FIG. 13B, the controller 170 may display information 1310 about the specific player on one side of the player or on the blank area of the screen.

As such, according to an embodiment of the present disclosure, the player's name uttered by the streamer may be recognized and the player may be marked in the sports video. Accordingly, the user may immediately recognize the player mentioned by the streamer on the screen, providing an immersive viewing experience.

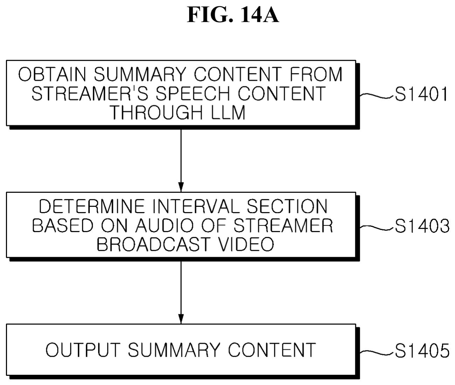

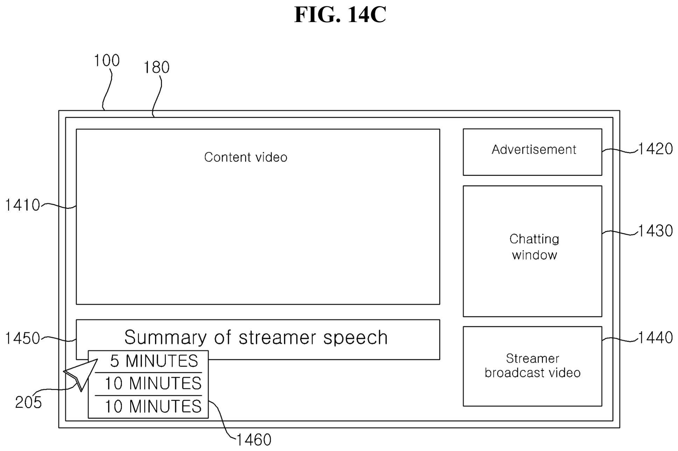

FIGS. 14A to 14C are diagrams illustrating an example of providing a summary of a streamer's speech content according to an embodiment of the present disclosure.

Referring to FIG. 14A, the controller 170 may collect the content speech of the streamer from the audio corresponding to the streamer broadcast video, and obtain a summary content from the streamer's speech content through a large language model (LLM) (S1401).

In one embodiment, the controller 170 may continuously collect the streamer's voice from the audio corresponding to the streamer's broadcast video. The controller 170 may convert the collected voice into a text through an STT engine and obtain the converted text as the speech content.

The controller 170 may obtain the summary content from the acquired speech content using the LLM stored in the memory 140. The LLM is an artificial intelligence-based model learned through a deep learning algorithm, and may be a model that understands the context of language from a text prompt and outputs a response according to an understanding result.

The controller 170 may determine an interval section based on the audio of the streamer broadcast video (S1403) and output the summary content obtained in the determined interval section (S1405).

The controller 170 may convert the streamer's voice included in the audio of the streamer broadcast video into a text and determine the interval section based on the analysis result of the text. The interval section may be one of a player's replacement section, a section between the first half and the second half, or a highlight broadcast section.

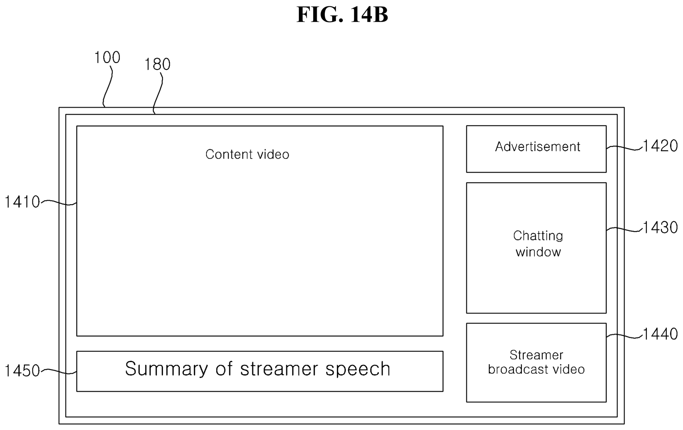

Referring to FIG. 14B, the display device 100 may display a sports video 1410, an advertising video 1420, a chat window 1430, and a streamer broadcast video 1440 on the display 180. The display device 100 may generate summary information from the speech content of the streamer through the LLM. The display device 100 may generate the summary information from the speech content of the streamer through te LLM at regular time intervals. The display device 100 may determine the interval section of a sport based on the streamer's voice.

The display device 100 may display summary information 1450 generated in the determined interval section on the display 180.

The display device 100 may display a summary time setting menu 1460 on the display 180 according to a command for selecting the summary content 1450. The summary setting menu 1460 may be a menu for setting a summary time unit for the summary content. For example, when 5 minutes is selected on the summary time setting menu 1460, the display device 100 may output the summary content in which the speech content of the streamer is summarized for 5 minutes.

As another example, a property of the summary settings menu 1460 may vary depending on the category of sports video 1410. For example, if the sport is baseball, the summary settings menu 1460 may include a plurality of innings units, and if the sport is boxing, the summary settings menu 1460 may include a plurality of round units.

When the display device 100 receives a command to select the left button provided on the remote control device 200 after the summary content 1450 is selected, the display device 100 may display a subtitle summarizing the speech content of the streamer up to 5 minutes prior to the current time.

As such, according to an embodiment of the present disclosure, the summary information summarizing the speech content of the streamer may be provided in the interval section of the sports. Accordingly, a user may efficiently receive information about the sports through summary information even if they cannot hear the streamer's entire speech.

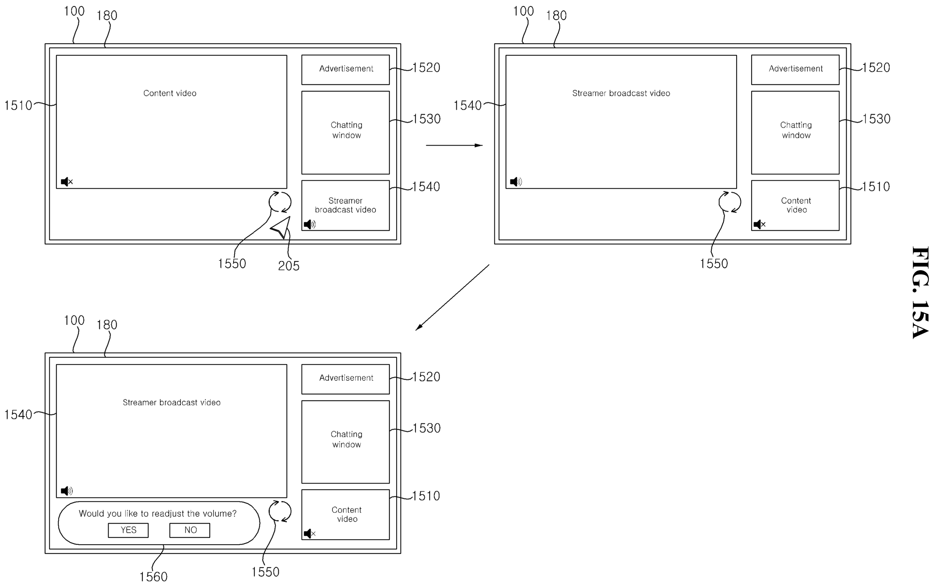

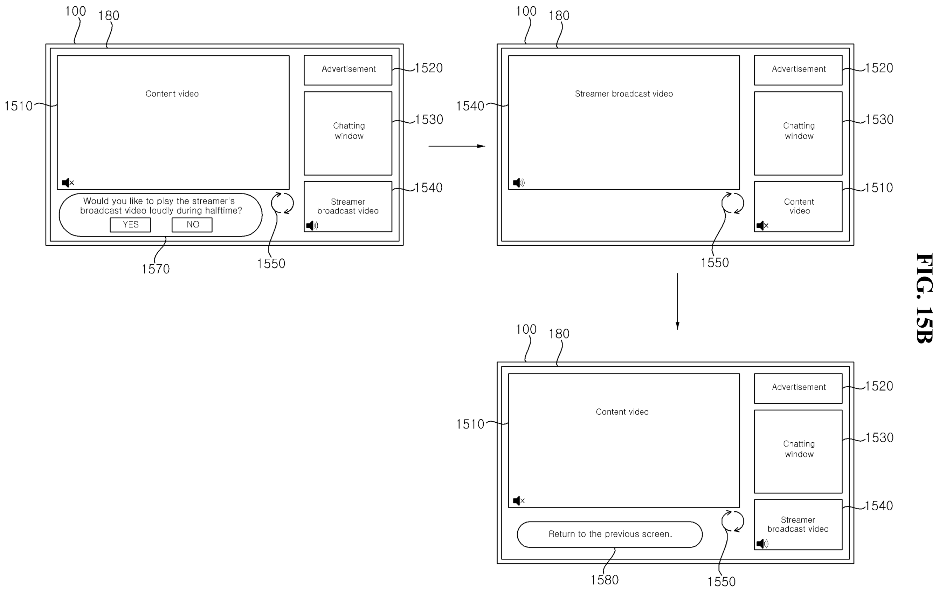

FIGS. 15A and 15B are diagrams illustrating an example of changing the display position between a content video and a streamer broadcast video according to an embodiment of the present disclosure.

Referring to FIG. 15A, the display device 100 may display a sports video 1510, an advertising video 1520, a chat window 1530, and a streamer broadcast video 1540 on the display 180.

When the pointer 205 is located between the sports video 1510 and the streamer broadcast video 1540 or when a specific button provided on the remote control device 200 is selected, the display device 100 may displaye a switch button 1550 on the display 180. The switch button 1550 may be a button for exchanging positions between the sports video 1510 and the streamer broadcast video 1540. The display device 100 may exchange a location of the sports video 1510 and a location of the streamer video 1540 in response to a command for selecting the switch button 1550.

In this state, when the display device 100 receives a command to reselect the switch button 1550, the location of the sports video 1510 and the location of the streamer broadcast video 1540 may be re-exchanged.

The display device 100 may display a volume adjustment pop-up window 1560 on the display 180 to adjust the volume of audio corresponding to each video according to a position change between two videos. When the display device 100 receives a command to accept volume adjustment through the volume adjustment pop-up window 1560, the display device 100 increases the volume of the audio corresponding to the streamer broadcast video 1540 and decreases the volume of the audio corresponding to the sports video 1510.

In this way, according to an embodiment of the present disclosure, a user may easily change the mutual position between the content video and the streamer broadcast video. Accordingly, the user may configure the layout the way he or she wants, which may increase viewing satisfaction.

Referring to FIG. 15B, the display device 100 may detect an event such as a half time, a timeout, or an advertisement playback time based on the sports video 1510 or the audio corresponding to the sports video 1510.

When an event is detected, the display device 100 may display an automatic switching pop-up window 1570 on the display 180 that allows the streamer broadcast video 1540 to be viewed in a larger size. When the display device 100 receives a command to accept an automatic switching through the automatic switching pop-up window 1570, the display device 100 may switch the positions of the sports video 1510 and the streamer broadcast video 1540.

The display device 100 may re- switch the positions of the sports video 1510 and the streamer broadcast video 1540 after the end of the event. The display device 100 may display a re-switching pop-up window 1580 indicating that the previous screen has been returned on the display 180 simultaneously with or after re-exchanging the location.

As such, according to an embodiment of the present disclosure, when an event such as the advertisement playback occurs, the mutual position between the content video and the streamer broadcast video may be automatically changed. Accordingly, the user's viewing flow is uninterrupted and a burden of separate operation may be reduced.

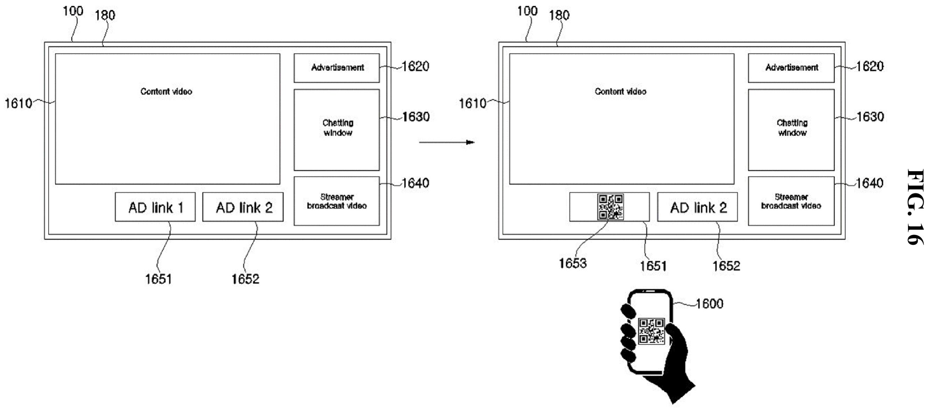

FIG. 16 is a diagram illustrating an example of providing information about a streamer's advertising product according to an embodiment of the present disclosure.

Referring to FIG. 16, a sports video 1610, an advertising video 1620, a chat window 1630, and a streamer broadcast video 1640 may be displayed on the display 180.

In one embodiment, the display device 100 may obtain advertising product information based on advertising information included in the streamer broadcast video 1640. The advertising product information may include one or more of a link or QR code that may access information about the advertising product (a name of the product, a manufacturer of the product, a price of the product, etc.). The display device 100 may extract an advertising product from the streamer broadcast video 1640 through an object detection model and search for information about the extracted advertising product.

In another embodiment, the display device 100 may obtain the advertising product information based on metadata of the streamer broadcast video 1640. The metadata of the streamer broadcast video 1640 may include one or more of streamer-related information, a title of the broadcast set by the streamer, and indirect advertisement information (Product Placement, PPL). When receiving the streamer video 1640, the display device 100 may also receive the metadata of the streamer video 1640. The display device 100 may obtain indirect advertising information by parsing metadata of the streamer broadcast video 1640. The indirect advertising information may include information about an advertising product promoted by the streamer. The display device 100 may search for the advertising product information using the obtained information about the advertising product, and obtain the advertising product information according to a search result.

As another example, the metadata of the streamer broadcast video 1640 may include one or more of a link or QR code that provides access to information about the advertising product (a name of the product, a manufacturer of the product, a price of the product, etc.).

The display device 100 may display advertising product items 1651 and 1652 promoted by the streamer on the display 180 when a game event corresponding to the sports video 1610 occurs, when a specific button provided on the remote control device 200 is selected, or when the streamer broadcast video 1640 is selected. Each advertising product item may include a link providing information about the advertising product.

When the advertising product item 1651 is selected, the display device 100 may display a QR code 1653 on the display 180 for access to a website that provides information about the advertising product.

The user may access the website that provides information about advertising product by scanning a QR code through a user terminal 1600.

In this way, according to the embodiment of the present disclosure, as an access to the advertising product promoted by the streamer is provided while watching the content video and the streamer broadcast video, the user may easily obtain information about the corresponding advertising product.

The display device 100 according to an embodiment of the present disclosure may comprise a display 180 configured to play a content video; and a controller 170 configured to search for one or more streamer broadcasts based on information of the content video, display the searched one or more streamer broadcasts on the display, and play a streamer broadcast video corresponding to a selected streamer broadcast with the content video according to a command for selecting one of the one or more streamer broadcasts.

The controller 170 may further obtain a first time information indicating a game progress time based on a first text included in the content video, obtain a second time information indicating a game progress time based on a second text included in the streamer broadcast video, obtain a difference between the first and second time information as a delay time, and synchronize the content video and the streamer broadcast video based on the delay time.

The controller 170 may further store a video being played first among the content video and the streamer broadcast video in a buffer based on the first and second time information, and delay an output of the video being played first by the delay time.

The controller 170 may further synchronize the content video and the streamer video based on the delay time if buffering occurs in at least one of the content video and the streamer video, or if a reception quality of at least one of the content video and the streamer video changes.

The controller 170 may further match a scene analysis result of the content video and an audio corresponding to the streamer broadcast video to synchronize the content video and the streamer broadcast video.

The controller 170 may further display one or more sync buttons on the display to synchronize the content video and the streamer broadcast video.

The information of the content video may include metadata including a matchup team and a match schedule, the controller 170 may further search for the one or more streamer broadcasts by comparing the metadata with information of a streamer broadcast being broadcast through a streaming application, wherein the information of the streamer broadcast includes a title and a broadcast time.

The controller 170 may further determine a recommendation ranking of a plurality of streamer broadcasts based on a reliability of each streamer if the plurality of streamer broadcasts are searched, and list the plurality of streamer broadcasts according to the determined recommendation ranking, wherein the reliability is determined by one or more number of live participants, number of subscribers, or existing viewing history of a corresponding channel.

The controller 170 may further display, on the display, a first volume control bar for adjusting a volume of a first audio corresponding to the content video and a second volume control bar for adjusting a volume of a second audio corresponding to the streamer broadcast video.

The controller 170 may further separate a first audio corresponding to the content video into a plurality of audio channels, adjust a volume of each of the plurality of audio channels and a volume of a second audio corresponding to the streamer broadcast video according to the characteristics of an event if it is determined that the event has occurred based on the content video.

The plurality of audio channels may include a broadcasting sound spoken by a commentator of the content video, a player sound spoken by a player, a coach sound spoken by a coach, and a crowd sound spoken by a spectator, the event represents a scoring situation, the controller 170 may further reduce the volume of the broadcast sound of the content video and the second audio of the streamer broadcast video, and increase the volume of the crowd sound and the player sound of the content video.

The controller 170 may further adjust a size of the content video and a size of the streamer broadcast video according to a command received from a remote control device.

The controller 170 may further determine a minimum screen ratio of the content video according to a sports category represented by the content video, and play the content video at the determined minimum screen ratio.

The controller 170 may further determine a minimum screen ratio of the streamer video based on a size of a text included in the streamer video, and play the streamer video at the determined minimum screen ratio.

The controller 170 may further extract an object from an audio corresponding to the streamer broadcast video, and display an indicator identifying the object extracted within the content video on the display.

The controller 170 may further display information about the object on the display in response to a command for selecting the indicator.

The controller 170 may further collect a speech content of a streamer from an audio corresponding to the streamer broadcast video, obtain a summary content from the speech content through a large language model, and display the summary content on the display during an interval section.

The controller 170 may further display a switch button on the display, and switch a display position between the content video and the streamer broadcast video in response to a command for selecting the switch button.

The controller 170 may further display a chat window for sharing a reaction to the streamer broadcast on the display.

According to an embodiment of the present disclosure, the above-described method may be implemented as processor-readable code on a program-recorded medium. Examples of media that the processor may read include ROM, RAM, CD-ROM, magnetic tape, floppy disk, and optical data storage devices.

The display device described above is not limited to the configuration and method of the above-described embodiments, and may be configured by selectively combining all or part of each embodiment so that various modifications may be made.

According to an embodiment of the present disclosure, the above-described method may be implemented with codes readable by a processor on a medium in which a program is recorded. Examples of the medium readable by the processor include a ROM (Read Only Memory), a Random Access Memory (RAM), a CD-ROM, a magnetic tape, a floppy disk, an optical data storage device, and the like.

## Claims

1. A display device (100), comprising:
a display (180) configured to play a content video; and
a controller (170) configured to:
search for one or more streamer broadcasts based on information of the content video,
display the searched one or more streamer broadcasts on the display (180), and
play a streamer broadcast video corresponding to a selected streamer broadcast with the content video according to a command for selecting one of the one or more streamer broadcasts.

2. The display device of claim 1, wherein the controller (170) is further configured to:
obtain a first time information indicating a game progress time based on a first text included in the content video,
obtain a second time information indicating a game progress time based on a second text included in the streamer broadcast video,
obtain a difference between the first and second time information as a delay time, and
synchronize the content video and the streamer broadcast video based on the delay time.

3. The display device of claim 2, wherein the controller (170) is further configured to:
store a video being played first among the content video and the streamer broadcast video in a buffer based on the first and second time information, and
delay an output of the video being played first by the delay time.

4. The display device of claim 2, or 3, wherein the controller (170) is further configured to:
synchronize the content video and the streamer video based on the delay time if buffering occurs in at least one of the content video and the streamer video, or if a reception quality of at least one of the content video and the streamer video changes.

5. The display device of any one of claims 1 to 4, wherein the controller (170) is further configured to:
match a scene analysis result of the content video and an audio corresponding to the streamer broadcast video to synchronize the content video and the streamer broadcast video.

6. The display device of any one of claims 1 to 5, wherein the controller (170) is further configured to:
display one or more sync buttons on the display to synchronize the content video and the streamer broadcast video.

7. The display device of any one of claims 1 to 6, wherein the information of the content video includes metadata including a matchup team and a match schedule,
wherein the controller (170) is further configured to:
search for the one or more streamer broadcasts by comparing the metadata with information of a streamer broadcast being broadcast through a streaming application,
wherein the information of the streamer broadcast includes a title and a broadcast time.

8. The display device of claim 7, wherein the controller (170) is further configured to:
determine a recommendation ranking of a plurality of streamer broadcasts based on a reliability of each streamer if the plurality of streamer broadcasts are searched, and
list the plurality of streamer broadcasts according to the determined recommendation ranking,
wherein the reliability is determined by one or more number of live participants, number of subscribers, or existing viewing history of a corresponding channel.

9. The display device of any one of claims 1 to 8, wherein the controller (170) is further configured to:
display, on the display, a first volume control bar for adjusting a volume of a first audio corresponding to the content video and a second volume control bar for adjusting a volume of a second audio corresponding to the streamer broadcast video.

10. The display device of any one of claims 1 to 9, wherein the controller (170) is further configured to:
separate a first audio corresponding to the content video into a plurality of audio channels, and
adjust a volume of each of the plurality of audio channels and a volume of a second audio corresponding to the streamer broadcast video according to the characteristics of an event if it is determined that the event has occurred based on the content video.

11. The display device of claim 10, wherein the plurality of audio channels includes a broadcasting sound spoken by a commentator of the content video, a player sound spoken by a player, a coach sound spoken by a coach, and a crowd sound spoken by a spectator,
the event represents a scoring situation,
wherein the controller is configured to:
reduce the volume of the broadcast sound of the content video and the second audio of the streamer broadcast video, and increase the volume of the crowd sound and the player sound of the content video.

12. The display device of any one of claims 1 to 11, wherein the controller (170) is further configured to:
determine a minimum screen ratio of the content video according to a sports category represented by the content video, and
play the content video at the determined minimum screen ratio.

13. The display device of any one of claims 1 to 12, wherein the controller (170) is further configured to:
determine a minimum screen ratio of the streamer video based on a size of a text included in the streamer video, and
play the streamer video at the determined minimum screen ratio.

14. The display device of any one of claims 1 to 13, wherein the controller (170) is further configured to:
collect a speech content of a streamer from an audio corresponding to the streamer broadcast video,
obtain a summary content from the speech content through a large language model, and
display the summary content on the display during an interval section.

15. A method of operating a display device (100), comprising:
playing a content video;
searching for one or more streamer broadcasts based on information of the content video;
displaying the searched one or more streamer broadcasts on the display; and
playing a streamer broadcast video corresponding to a selected streamer broadcast with the content video according to a command for selecting one of the one or more streamer broadcasts.
